(19) Europäisches Patentamt
European Patent Office
Office européen des brevets

(11) EP 2 115 040 B1

(12) **FASCICULE DE BREVET EUROPEEN**

(45) Date de publication et mention de la délivrance du brevet:
**06.04.2011 Bulletin 2011/14**

(21) Numéro de dépôt: **08762038.1**

(22) Date de dépôt: **06.02.2008**

(51) Int Cl.:
***C08G 81/02*** *(2006.01)* ***C08L 77/00*** *(2006.01)*
***C08L 29/04*** *(2006.01)* ***C08L 87/00*** *(2006.01)*
***C08L 51/00*** *(2006.01)*

(86) Numéro de dépôt international:
**PCT/FR2008/050180**

(87) Numéro de publication internationale:
**WO 2008/104677 (04.09.2008 Gazette 2008/36)**

# (54) COMPOSITION THERMOPLASTIQUE SOUPLE A TENUE AUX HUILES AMELIOREE ET UTILISATION D'UNE TELLE COMPOSITION

FLEXIBLE THERMOPLASTISCHE ZUSAMMENSETZUNG MIT ERHÖHTER BESTÄNDIGKEIT GEGEN DEN EINFLUSS VON ÖLEN UND VERWENDUNG EINER SOLCHEN ZUSAMMENSETZUNG

FLEXIBLE THERMOPLASTIC COMPOSITION WITH IMPROVED RESISTANCE TO THE EFFECT OF OILS, AND USE OF SUCH A COMPOSITION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.02.2007 FR 0753094**
**22.03.2007 US 896313 P**

(43) Date de publication de la demande:
**11.11.2009 Bulletin 2009/46**

(73) Titulaire: **ARKEMA FRANCE**
**92700 Colombes (FR)**

(72) Inventeurs:
- **BIZET, Stéphane**
**F-27470 Serquigny (FR)**
- **FLAT, Jean-Jacques**
**F-27170 Goupillieres (FR)**

(56) Documents cités:
**EP-A- 0 403 109** **EP-A- 0 731 308**
**EP-A- 1 022 309** **EP-A- 1 459 885**
**US-A- 5 342 886** **US-A1- 2005 112 312**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 115 040 B1

## Description

La présente invention concerne des compositions thermoplastiques souples à haute tenue thermomécanique et ayant une bonne résistance au vieillissement dans les huiles. La présente invention vise également l'utilisation d'une telle composition.

La présente invention se rapporte plus particulièrement à des compositions thermoplastiques à base de polyoléfines fonctionnalisées greffées par des motifs polyamides.

De telles compositions sont utiles pour la fabrication de pièces extrudées et/ou injectées dans les applications en automobile. A titre non limitatif, on peut citer les pièces situées sous le capot, dénommées "sous capot moteur" dans la suite de la description, de telles pièces pouvant notamment servir pour isoler et protéger des câbles électriques ou des fibres optiques.

Il est décrit dans le document WO 02/28959 au nom de la Demanderesse, un copolymère greffé à blocs polyamides sur un tronc en polyoléfine qui est choisi parmi les copolymères éthylène/ anhydride maléique et éthylène/ (méth)acrylate d'alkyle/anhydride maléique, formant un alliage co-continu nanostructuré; cela confère à ce copolymère des propriétés thermomécaniques exceptionnelles, qui sont maintenues en redispersant ce copolymère greffé dans des polyoléfines souples telles que les copolymères souples de l'éthylène.

De tels mélanges trouvent des applications comme adhésifs, films, bâches, produits calandrés, câbles électriques ou poudres pour des procédés de moulage d'objets ("slush-molding").

Ces copolymères oléfiniques greffés à blocs polyamides sont des matériaux qui présentent cependant des valeurs médiocres de résistance au vieillissement dans les huiles, ce qui limite leur utilisation dans les applications dans le domaine automobile, telles que les pièces "sous capot moteur".

Par tenue aux huiles ou résistance au vieillissement dans les huiles de ces compositions thermoplastiques, on entend d'une part le niveau de rétention des propriétés mécaniques, en particulier l'allongement à la rupture (AR) et la contrainte à la rupture (CR), mesurés en traction, après un séjour dans l'huile et d'autre part les valeurs de gonflement massique et volumique après immersion dans ces huiles.

Le document US 5 278 229 décrit une composition oléfinique comprenant:

- (A) de 50 à 99.5 % en poids d'une résine polyoléfine telle que du polyéthylène ou du polypropylène,
- (B) de 0.4 à 50 % en poids d'un copolymère d'éthylène/acétate de vinyle saponifié, et
- (C) de 0.1 à 15 % en poids d'un copolymère d'éthylène greffé anhydride maléique ayant réagi avec un polyamide oligomère de degré de polymérisation >15.

Cette composition est utilisée dans une structure multicouche comme couche barrière à l'oxygène, mais n'apporte pas de résistance au vieillissement aux huiles.

Le document EP 0 403 109 décrit des compositions constituées de **:**

- 5 à 95 % en poids d'un copolymère d'éthylène/acétate de vinyle saponifié,
- 95 à 5% en poids d'un polyamide dont les groupes terminaux amine sont majoritaires,
- 0.5 à 10 % en poids d'une polyoléfine modifiée par un acide carboxylique insaturé, telle qu'un polyéthylène modifié anhydride maléique. Ces compositions sont utilisées pour améliorer la stabilité des feuilles ou films formés en extrusion, en évitant la formation de gels et comportent des taux d'au plus 10 % en polyoléfine fonctionnalisée.

Le document EP 1 022 309 décrit des compositions à base d'un copolymère de l'éthylène et de l'alcool vinylique comprenant en poids:

- 50 à 98 % d'un copolymère EVOH,
- 1 à 50 % d'un polyéthylène (A), pouvant être un copolymère éthylène-(méth) acrylate d'alkyle,
- 1 à 15 % d'un polymère (B) résultant de la réaction (i) d'un copolymère (B1) de l'éthylène et d'un monomère insaturé X greffé ou copolymérisé avec (ii) un copolyamide (B2). Le taux en polymère (B) ou polyoléfine fonctionnalisée ayant réagi avec du polyamide est au maximum de 15% en poids, soit un taux bien inférieur à celui des compositions de l'invention.

Le but de l'invention est de proposer une composition thermoplastique souple à base de polyoléfines fonctionnalisées greffées par des polyamides, qui conserve des propriétés de bon niveau, notamment en termes d'allongement, de contrainte à la rupture, de gonflement massique et volumique, après vieillissement aux huiles, l'ensemble de ces propriétés étant également conservé par les matériaux ou objets obtenus à partir d'une telle composition.

La composition thermoplastique souple à base de polyoléfines fonctionnalisées greffées par des polyamides est du type comprenant un copolymère greffé à blocs polyamides constitué d'un tronc en polyoléfine et d'au moins un

greffon en polyamide dans lequel :

- les greffons sont attachés au tronc par les restes d'un monomère insaturé (X) ayant une fonction capable de réagir avec un polyamide ayant une extrémité amine ou une extrémité acide carboxylique,
- les restes du monomère insaturé (X) sont fixés sur le tronc par greffage ou copolymérisation depuis sa double liaison.

Selon l'invention, la composition thermoplastique comprend :

- de 40 à 90 % en poids du tronc en polyoléfine comprenant le monomère insaturé (X),
- de 5 à 40 %, de préférence de 15 à 30 %, en poids de greffons en polyamide, et
- de 5 à 40 %, de préférence de 10 à 30 %, en poids d'au moins un polymère choisi parmi un copolymère éthylène/acétate de vinyle saponifié (EVOH) et un polyamide.

La présence d'au moins un polymère choisi parmi un copolymère éthylène/acétate de vinyle saponifié (EVOH) et un polyamide permet de conférer à la composition thermoplastique, en combinaison avec la polyoléfine fonctionnalisée greffée par des polyamides, des propriétés nettement améliorées en termes de résistance au vieillissement aux huiles, par rapport à une composition thermoplastique comprenant une polyoléfine fonctionnalisée greffée par des polyamides, mais dépourvue d'au moins un tel polymère.

Selon une version avantageuse de l'invention, les greffons en polyamide ont une masse molaire comprise entre 1000 et 5000 $g.mol^{-1}$, de préférence comprise entre 2000 et 3000 $g.mol^{-1}$.

Préférentiellement, le polyamide des greffons est un polyamide monofonctionnel, qui présente soit une extrémité amine, soit une extrémité acide carboxylique.

Un tel polyamide monofonctionnel est avantageusement choisi parmi le polyamide 6, le polyamide 11, le polyamide 12, le copolyamide 6/11 et le copolyamide 6/12.

Plus préférentiellement, on utilise un polyamide monoaminé.

Selon une version avantageuse de l'invention, le monomère insaturé (X) est choisi parmi un anhydride d'acide carboxylique insaturé et un époxyde insaturé.

De préférence, le tronc en polyoléfine sur lequel est fixé le monomère insaturé (X) est choisi parmi le copolymère éthylène/anhydride maléique, le terpolymère éthylène/(méth)acrylate d'alkyle/anhydride maléique et le terpolymère éthylène/(méth)acrylate d'alkyle/(méth)acrylate de glycidyle.

De préférence, il y a au moins 1,3 monomère insaturé X fixé sur le tronc en polyoléfine.

Selon un premier mode de réalisation, le copolymère éthylène/acétate de vinyle saponifié, également dénommé copolymère d'éthylène et d'alcool vinylique ou encore EVOH, a une teneur en éthylène comprise entre 20 et 60 % en moles, de préférence entre 29 et 48 % en moles, et un indice de fluidité (MFI) compris entre 2 et 30 g/10mn (mesuré à 210°C sous 2,16 kg).

Selon un second mode de réalisation, le polyamide peut être un polyamide tel que du PA 6, PA 11, PA 12, PA 6-6, ou encore un copolyamide, parmi lesquels on peut notamment citer le copolyamide 6/11, le copolyamide 6/12 et le copolyamide 6/6-6. Rien n'interdit d'envisager un mélange de deux ou plusieurs de ces polyamides et/ou copolyamides.

De manière préférentielle, la masse molaire du polyamide est supérieure ou égale à 10000 $g.mol^{-1}$. Par haute masse molaire, on entend cette gamme de masses molaires.

De manière particulièrement avantageuse, le polyamide est de même nature chimique que le polyamide des greffons.

Classiquement, la composition conforme à l'invention peut comprendre en outre un ou plusieurs additifs, tels que des anti-oxydants, des stabilisants thermiques.

La présente invention se rapporte également à l'utilisation de la composition thermoplastique énoncée ci-dessus.

Selon l'invention, l'utilisation de cette composition thermoplastique est envisagée pour la fabrication de pièces, de préférence par extrusion ou injection, notamment pour l'industrie automobile, en particulier de pièces disposées "sous capot-moteur".

Les compositions résistant au vieillissement dans l'huile selon l'invention, trouvent une utilisation avantageuse pour la fabrication de pièces telles que des lignes ou tuyaux de transfert de fluides, par exemple du carburant ou du liquide de refroidissement, des joints ou des couches de revêtement ou manchons de protection de câbles.

Le copolymère greffé à blocs polyamides peut être obtenu par réaction d'un polyamide, de préférence monofonctionnel, qui présente soit une extrémité réactive qui est une fonction amine, soit une extrémité réactive qui est une fonction acide carboxylique, avec les restes d'un monomère insaturé X fixé par greffage ou copolymérisation sur un tronc en polyoléfine.

Le monomère insaturé (X) est de préférence choisi parmi un anhydride d'acide carboxylique insaturé et un époxyde insaturé.

En particulier, dans le cas où l'extrémité réactive du greffon en polyamide est une fonction acide carboxylique, le monomère insaturé (X) est un époxyde insaturé.

Dans le cas où l'extrémité réactive du greffon en polyamide est une fonction amine, le monomère insaturé (X) peut être soit un époxyde insaturé, soit un anhydride d'acide carboxylique insaturé.

Que l'on soit dans le cas d'une extrémité amine ou d'une extrémité acide carboxylique, l'époxyde insaturé peut être choisi parmi les esters et éthers de glycidyle aliphatiques tels que l'allylglycidyléther, le vinylglycidyléther, le maléate et l'itaconate de glycidyle, l'acrylate et le méthacrylate de glycidyle, les esters et éthers de glycidyle alicycliques tels que le 2-cyclohexène-4,5-diglycidylcarboxylate, le cyclohexène-4-glycidyl carboxylate, le 5-norbomène-2-méthyl-2-glycidyl carboxylate et l'endo-cis-bicyclo(2,2,1)-5-heptène-2,3-diglycidyl dicarboxylate.

L'anhydride d'acide carboxylique insaturé peut être choisi parmi les anhydrides maléique, itaconique, citraconique, allylsuccinique, cyclohex-4-ène-1,2-dicarboxylique, 4-méthylènecyclohex-4-ène-1,2-dicarboxylique, bicyclo (2,2,1)hept-5-ène-2,3-dicarboxylique, et x-méthylbicyclo(2,2,1)hept-5-ène-2,2-dicarboxylique. On utilise avantageusement l'anhydride maléique.

On ne sortirait pas du cadre de l'invention en remplaçant tout ou partie de l'anhydride d'acide carboxylique insaturé par un acide carboxylique insaturé tel que par exemple l'acide (meth)acrylique.

Avantageusement, on utilise un polyamide à fonctionnalité amine

S'agissant du tronc en polyoléfine, on définit une polyoléfine comme un homopolymère ou copolymère d'alpha oléfines ou de dioléfines, telles que par exemple, éthylène, propylène, butène-1, octène-1, butadiène. A titre d'exemple, on peut citer :

- les homopolymères et copolymères du polyéthylène, en particulier LDPE, HDPE, LLDPE (linear low density polyéthylène, ou polyéthylène basse densité linéaire), VLDPE (very low density polyéthylène, ou polyéthylène très basse densité) et le polyéthylène, métallocène,
- les homopolymères ou copolymères du propylène,
- les copolymères éthylène/alpha-oléfine tels qu'éthylène/propylène, les EPR (abréviation d'éthylène-propylene-rubber) et éthylène/propylène/diène (EPDM),
- les copolymères blocs styrène/éthylène-butène/styrène (SEBS), styrène/butadiène/styrène (SBS), styrène/isoprène/ styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40 % en poids.

Avantageusement les troncs en polyoléfine sur lesquels sont attachés les restes de monomère insaturé X sont des polyéthylènes greffés par ce monomère insaturé X ou des copolymères de l'éthylène et de monomère insaturé X qu'on obtient par exemple par polymérisation radicalaire.

S'agissant des polyéthylènes sur lesquels on vient greffer le monomère insaturé X, on entend par polyéthylène des homopolymères de l'éthylène ainsi que des copolymères de l'éthylène et d'un ou plusieurs comonomères.

A titre de comonomères, on peut citer :

- les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.

Avantageusement, le polyéthylène, qui peut être un mélange de plusieurs polymères, comprend au moins 50 % en moles, et de préférence 75 % en moles, d'éthylène ;sa densité peut être comprise entre 0,86 et 0,98 3 g/$cm^3$. Le MFI (indice de viscosité à 190°C, 2,16 kg) est compris avantageusement entre 20 et 1000 g/ 10 min.

A titre d'exemples de polyéthylène, on peut citer:

- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)

- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60 % en poids de (méth)acrylate et de préférence 2 à 40%.

Le greffage est une opération connue en soi.

S'agissant des copolymères de l'éthylène et de monomère insaturé X, c'est-à-dire ceux dans lesquels le monomère insaturé X n'est pas greffé, il s'agit des copolymères de l'éthylène, de monomère insaturé X et, éventuellement, d'un autre monomère pouvant être choisi parmi les comonomères qu'on a cités plus haut pour les copolymères de l'éthylène destinés à être greffés.

On utilise avantageusement les copolymères éthylène/anhydride maléique et éthylène/(méth)acrylate d'alkyle/anhydride maléique.

Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (190°C - 2,16 kg). Les (méth)acrylates d'alkyle ont déjà été décrits plus haut. La température de fusion est comprise entre 60 et 120°C.

Selon une version avantageuse de l'invention, il y a en moyenne au moins 1,3 monomère insaturé X fixé sur le tronc en polyoléfine, avantageusement de 1,3 à 10, et de préférence de 1,3 à 7.

L'homme de métier peut déterminer facilement par analyse IRTF ce nombre de monomères X.

Par exemple, si X est l'anhydride maléique et la $M_w$ = 95 000 g/mol de la polyoléfine, on a trouvé que ceci correspondait à une proportion d'anhydride d'au moins 1,5 % en poids de l'ensemble du tronc de polyoléfine contenant X et de préférence de 2,5 à 4 %. Ces valeurs associées à la masse des polyamides à terminaison amine déterminent la proportion de polyamide et de tronc dans le copolymère greffé à blocs polyamides.

S'agissant du polyamide, de préférence monofonctionnel, à extrémité amine ou acide, on entend par polyamide les produits de condensation:

- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique, ou
- des mélanges de plusieurs monomères ce qui conduit à des copolyamides.

On peut utiliser des mélanges de polyamides.

On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6). Plus préférentiellement, on utilise le PA 11.

Le degré de polymérisation peut varier dans de larges proportions, selon sa valeur c'est un polyamide ou un oligomère de polyamide. Dans la suite du texte on utilisera indifféremment les deux expressions pour les greffons.

Pour que le polyamide ait une terminaison monoamine, il suffit d'utiliser un limiteur de chaîne de formule

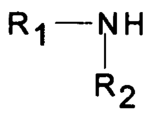

dans laquelle :

- $R_1$ est l'hydrogène ou un groupement alkyle linéaire ou ramifié contenant jusqu'à 20 atomes de carbone,
- $R_2$ est un groupement ayant jusqu'à 20 atomes de carbone alkyle ou alcényle linéaire ou ramifié, un radical cycloaliphatique saturé ou non, un radical aromatique ou une combinaison des précédents. Le limiteur peut être, par exemple, la laurylamine ou l'oleylamine.

Pour que le polyamide ait une terminaison monoacide carboxylique, il suffit d'utiliser un limiteur de chaîne de formule $R'_1$-COOH, $R'_1$-CO-O-CO-$R'_2$ ou un diacide carboxylique.

$R'_1$ et $R'_2$ sont des groupements alkyles linéaires ou ramifiés contenant jusqu'à 20 atomes de carbone.

Les monomères amino-acides ou lactames préférés pour la synthèse de l'oligomère monoaminé selon l'invention sont choisis parmi le caprolactame, l'acide amino-11-undécanoïque ou le dodécalactame.

Avantageusement, le polyamide possède une extrémité à fonctionnalité amine. Les limiteurs monofonctionnels de polymérisation préférés sont la laurylamine et l'oléylamine.

Avantageusement, le polyamide monofonctionnel a une masse molaire comprise entre 1000 et 5000 g/mole et de préférence entre 2000 et 3000.

La polycondensation définie ci-dessus s'effectue selon les procédés habituellement connus, par exemple à une température comprise en général entre 200 et 300°C, sous vide ou sous atmosphère inerte, avec agitation du mélange réactionnel. La longueur de chaîne moyenne de l'oligomère est déterminée par le rapport molaire initial entre le monomère polycondensable ou le lactame et le limiteur monofonctionnel de polymérisation. Pour le calcul de la longueur de chaîne moyenne, on compte habituellement une molécule de limiteur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement, X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 230 et 300 °C. Le temps de séjour moyen de la matière fondue dans l'extrudeuse peut être compris entre 5 secondes et 5 minutes, et de préférence entre 20 secondes et 1 minute. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides de la présente invention sont caractérisés par une organisation nano structurée avec des lamelles de polyamide d'épaisseur comprise entre 10 et 50 nanomètres.

Avantageusement, la proportion de copolymère greffé à blocs polyamides est de 70 à 90% en poids pour respectivement 30 à 10 % de copolymère d'éthylène/acétate de vinyle saponifié et/ou de polyamide de haute masse molaire.

Les mélanges de l'invention peuvent être préparés par mélange à l'état fondu dans des extrudeuses (mono ou bi vis), des malaxeurs BUSS, des mélangeurs BRABENDER et en général les dispositifs habituels de mélange des polymères thermoplastiques et de préférence les extrudeuses bivis corotatives.

Les mélanges de l'invention peuvent être préparés en une étape dans une extrudeuse. Dans les premières zones, on introduit le tronc contenant X, tel que un copolymère éthylène/(meth)acrylate d'alkyle/anhydride maléique, le polyamide à extrémité amine puis, quelques zones plus loin, l'agent ignifugeant par gavage latéral.

On peut aussi introduire tous les ingrédients dans la première zone de l'extrudeuse.

S'agissant du polymère permettant d'améliorer la résistance au vieillissement dans les huiles, il peut être choisi parmi :

- les copolymères d'éthylène et d'acétate de vinyle saponifié, également dénommés copolymères d'éthylène et d'alcool vinylique (EVOH), dont la teneur en éthylène est comprise entre 20 et 60 % en moles; de préférence entre 29 et 48 % en moles. De préférence, ces copolymères ont un indice de fluidité ou MFI compris entre 2 et 30 g/10mn (mesuré à 210°C sous 2,16 kg) et présentent un degré de saponification de l'acétate de vinyle d'au moins 95 % en moles;
- un polyamide. On peut notamment utiliser un polyamide 6, 11, 12, 6-6, un copolyamide 6/11, 6/12 ou 6/6-6. Avantageusement, on utilise un polyamide de même nature chimique que le greffon polyamide.

On ne sortirait pas du cadre de l'invention si on utilisait un mélange de polyamide et d'EVOH, par exemple un mélange de PA 6 et d'EVOH.

Préférentiellement, les compositions de l'invention ont une variation dimensionnelle après vieillissement dans l'huile inférieure ou égale à 65%. Avantageusement, ces compositions présentent une prise en masse après vieillissement dans l'huile inférieure ou égale à 75%. De manière encore plus préférée, ces compositions présentent une variation dimensionnelle après vieillissement dans l'huile inférieure ou égale à 65% et une prise en masse après vieillissement dans l'huile inférieure ou égale à 75%. Les définitions de la variation dimensionnelle, de la prise en masse, ainsi que les conditions de vieillissement des compositions sont définies dans la description des méthodes de caractérisation des matériaux présentée ci-après.

Avantageusement, les compositions de l'invention présentent un taux de rétention en allongement à la rupture après vieillissement dans l'huile supérieur ou égal à 30% ou un taux de rétention en contrainte à la rupture après vieillissement dans l'huile supérieur ou égal à 30%. Avantageusement, les compositions de l'invention présentent un taux de rétention en allongement à la rupture après vieillissement dans l'huile supérieur ou égal à 30% et un taux de rétention en contrainte à la rupture après vieillissement dans l'huile supérieur ou égal à 30%. Les définitions des taux

de rétention en allongement et en contrainte à la rupture, ainsi que les conditions de vieillissement des compositions sont définies dans la description des méthodes de caractérisation des matériaux présentée ci-après.

Les compositions selon l'invention peuvent renfermer en outre au moins un additif choisi parmi les colorants, les pigments, les azurants, les anti-oxydants, les stabilisants UV, ou d'autres charges, par exemple des nanocharges, telles que des nanoargiles ou des nanotubes de carbone.

Les compositions de l'invention sont préparées, soit par mélange de l'ensemble des composés (copolymère, additifs) dans un procédé dit "en direct", soit en ajoutant le ou les polymères permettant d'améliorer la résistance au vieillissement aux huiles au mélange de copolymère et de PA déjà préparé (procédé dit "en reprise").

La description qui va suivre fait état de compositions thermoplastiques conformes à la présente invention. Cette description détaillée est faite en référence à des tableaux et des clichés qui sont donnés à titre illustratif, mais qui en aucun cas ne visent à limiter la portée de la présente invention.

Matériaux employés

**Lotader® 7500:** terpolymère d'éthylène, d'acrylate d'éthyle (17,5 % en poids) et d'anhydride maléique (2,8 % en poids) produit par ARKEMA possédant un MFI (190°C sous 2,16 kg mesuré selon ISO 1133) de 70g/10mn.

**Lotader® 3210 :** terpolymère d'éthylène, d'acrylate de butyle (6 % en poids) et d'anhydride maléique (3,1 % en poids) produit par ARKEMA possédant un MFI (190°C sous 2,16 kg mesuré selon ISO 1133) de 5g/10mn.

**PA6 oligomère:** Polyamide 6 terminé par une fonction amine de masse molaire moyenne en nombre ($M_n$) égale à 2500 g/mol mesurée par GPC correspondant à un nombre de fonctions amines terminales de 400 meq/kg.

**ULTRAMID® B4:** Polyamide 6 produit par BASF caractérisé par un MVR (melt volume rate à 275°C sous 5 kg mesuré selon ISO 1133) de 16 $cm^3$/10mn. **DOMAMID® 24:** Polyamide 6 produit par DOMO possédant un nombre de fonctions amine terminales de 40 meq/kg et possédant une viscosité relative à 1 % en solution dans l'acide sulfurique (96 %) à 20°C de 2,45 ± 0,05 (méthode BUP-02).

**DOMAMID® 27 :** Polyamide 6 produit par DOMO possédant un nombre de fonctions amine terminales de 44 meq/kg et possédant une viscosité relative à 1 % en solution dans l'acide sulfurique (96 %) à 20°C de 2,70 ± 0,05 (méthode BUP-02).

**PA11 oligomère:** Polyamide 11 terminé par une fonction amine, de masse molaire moyenne en nombre ($M_n$) égale à 2500 g/mol mesurée par GPC correspondant à un nombre de fonctions amines terminales de 400 meq/kg. **RILSAN® BMNO TLD:** Polyamide 11 produit par ARKEMA de masse molaire moyenne en nombre ($M_n$) égale à 12 000 g/mol mesurée par GPC (conditions opératoires : température colonne GPC à 40°C, PA11 en solution à $1g.L^{-1}$ dans l'hexafluoroisopropanol, étalonnage avec un PMMA).

**Soarnol® H4815:** copolymère d'éthylène et d'alcool vinylique (EVOH) contenant 48 % en mole de motif éthylène produit par Nippon Gohsei possédant un MFI de 16 g/10mn (210°C sous 2,16 kg).

**Soarnol® A4412:** copolymère d'éthylène et d'alcool vinylique (EVOH) contenant 44 % en mole de motif éthylène produit par Nippon Gohsei possédant un MFI de 12 g/10mn (210°C sous 2,16 kg).

**Soarnol® AT4403:** copolymère d'éthylène et d'alcool vinylique (EVOH) contenant 44 % en mole de motif éthylène produit par Nippon Gohsei possédant un MFI de 3 g/10mn (210°C sous 2,16 kg).

**Soarnol® DC3212 :** copolymère d'éthylène et d'alcool vinylique (EVOH) contenant 32 % en mole de motif éthylène produit par Nippon Gohsei possédant un MFI de 12 g/10mn (210°C sous 2,16 kg).

**Soarnol® DC3203:** copolymère d'éthylène et d'alcool vinylique (EVOH) contenant 32 % en mole de motif éthylène produit par Nippon Gohsei possédant un MFI de 3 g/10mn (210°C sous 2,16 kg).

**Irganox 1098 :** Stabilisant thermique de type phénol encombré produit par la société CIBA.

**Irgafos 168 :** Stabilisant thermique de type phosphite produit par la société CIBA.

Procédés de fabrication des mélanges

Une partie des formulations décrites ci-dessous est préparée par compoundage grâce à une extrudeuse double vis co-rotative de type ZSK 30 de COPERION Werner et Pfleiderer® dont les éléments de fourreaux sont chauffés selon un profil plat à 240°C ; la vitesse de rotation est de 300 rpm avec un débit de 25 kg/h. Ce procédé sera nommé W30-1 par la suite.

Une autre partie des formulations est préparée selon une variante du procédé décrit ci-dessus, à savoir que le profil de température utilisé est un profil plat à 260°C et le débit est de 15 kg/h pour une vitesse de vis de 300 rpm. Ce procédé sera nommé W30-2 par la suite.

Dans les deux cas, les produits sont introduits en zone 1 par bi-alimentation. D'un côté, le polyamide oligomère est pré-mélangé (mélange manuel en sac) avec l'Irganox 1098 et l'Irgafos168 et le mélange est introduit à l'aide d'un doseur pondéral de type K-TRON S200. Le copolymère EVOH et le Lotader® sont pré-mélangés (mélange manuel en sac) et également introduits à l'aide d'un doseur pondéral de type K-TRON S200.

Description des méthodes de caractérisation des matériaux

**Réalisation de bandes par extrusion :** les granulés issus des procédés de synthèse sont mis en forme grâce à une extrudeuse double vis de laboratoire de type ThermoHaake Rheocord System 40 équipée d'une filière plate, l'extrudeuse étant chauffée à 210°C pour donner des bandes dans lesquelles seront découpées les éprouvettes nécessaires à la caractérisation des matériaux. L'épaisseur des bandes obtenues est comprise entre 1 et 2,5 mm.

**Mesure du MFI :** elle est réalisée selon la norme ISO 1133 dans les conditions suivantes (230°C, 2.16 kg) sauf si mention différente.

**Vieillissement dans les huiles :** les éprouvettes de type IFC (Institut Français du Caoutchouc) découpées dans les bandes préparées selon le procédé décrit ci-dessus sont immergées dans l'huile IRM 903 pendant 3 jours à 90°C. L'huile IRM 903 est une huile de référence (naphtalénique) utilisée pour évaluer la résistance aux huiles des caoutchoucs. Elle remplace l'huile ASTM n°3 utilisée dans la norme ASTM D471 décrivant les tests d'évaluation de résistance aux fluides des caoutchoucs. Les dimensions (largeur et épaisseur) et la masse des éprouvettes sont mesurées avant et après leur séjour dans l'huile. Les variations dimensionnelles et la prise en masse de chacune des éprouvettes sont calculées selon les formules 1 et 2 suivantes :

$$\text{(1) Variation dimensionnelle} = [(e.l)_{t=3j}-(e.l)_{t=0}]\times 100/[(e.l)_{t=0}],$$

où $(e.l)_{t=3j}$ est le produit de l'épaisseur e de l'éprouvette par sa largeur l après les 3 jours d'immersion dans l'huile et $(e.l)_{t=0}$ est le produit de l'épaisseur de l'éprouvette par sa largeur avant vieillissement.

$$\text{(2) Prise en masse} = [m_{t=3j}-m_{t=0}]\times 100/m_{t=0},$$

où $m_{t=3j}$ est la masse de l'éprouvette après 3 jours d'immersion dans l'huile et $m_{t=0}$ est la masse de l'éprouvette avant vieillissement.

Pour chaque formulation, 3 éprouvettes sont mises à vieillir et les résultats de prise en masse et de variation dimensionnelle sont moyennés sur ces 3 éprouvettes.

**Allongement et contrainte à la rupture :** l'allongement et la contrainte à la rupture sont mesurés en traction à l'aide d'un dynamomètre Zwick Z010 sur des éprouvettes de type IFC. L'allongement des éprouvettes est mesuré à partir du déplacement des traverses. La vitesse de traction est de 50 mm/min. Les propriétés mécaniques des compositions sont évaluées avant et après immersion dans l'huile. Un taux de rétention en allongement et en contrainte à la rupture après vieillissement est calculé selon la formule 3 :

$$\text{(3) Taux de rétention} = [X_{t=3j}/X_{t=0}]\times 100,$$

où $X_{t=3j}$ est l'allongement ou la contrainte à la rupture de l'éprouvette après 3 jours de vieillissement et $X_{t=0}$ est l'allongement ou la contrainte à la rupture de l'éprouvette avant vieillissement.

Pour chaque formulation, les propriétés mécaniques avant et après vieillissement sont moyennées sur 3 éprouvettes. Les éprouvettes servant à la mesure des propriétés mécaniques après vieillissement dans l'huile sont les mêmes sur lesquelles sont pratiquées les mesures dimensionnelles et de prise en masse.

**Analyse de la morphologie :** la morphologie des matériaux est examinée sur les bandes extrudées par microscopie électronique à transmission à partir de coupes ultrafines réalisées à -100°C et perpendiculairement au sens d'extrusion. Les coupes sont immergées dans une solution d'acide phosphotungstique à 2 % additivée d'alcool benzylique pour densifier essentiellement la phase polyamide du matériau.

Pour révéler d'avantage la phase EVOH de la composition, des coupes sont exposées pendant 30 secondes à des vapeurs de tétraoxyde de ruthénium.

**Réalisation de films pour la mesure de perméabilité :** des films d'épaisseur environ 100 $\mu$m ont été réalisés par extrusion à partir de granulés à l'aide d'une extrudeuse de laboratoire de type Randcastle RCP 0500.

**Perméabilité à l'oxygène :** la perméabilité à l'oxygène (OTR exprimée en $cm^3.100pm/m^2/24h$) de films extrudés préparés dans les conditions décrites ci-dessus a été mesurée à 23°C et 0% d'humidité relative à l'aide d'un perméamètre Systech 8001.

Exemples 1 à 8 : *Performance de tenue aux huiles de compositions à base de greffons de polyamide 6 oligomères et d'EVOH*

Dans le tableau 1 ci-après, sont rassemblées les mesures de performances en tenue aux huiles de 8 compositions à greffon en polyamide 6 oligomère de Mn = 2500 $g.mol^{-1}$ et d'EVOH conformes à l'invention (exemples 1 à 8) et de 2 compositions sans EVOH (exemples comparatifs notés EC1 et EC2).

Tableau 1

| Exemples | EC1 | EC2 | 1 | 2 | 3 | 4 | 5 | 6 | 7 | 8 |
|---|---|---|---|---|---|---|---|---|---|---|
| Procédé | W30-1 | W30-2 | W30-1 | W30-1 | W30-1 | W30-1 | W30-1 | W30-1 | W30-1 | W30-1 |
| Lotader® 7500 | 79 | 69 | 59 | 49 | 59 | 49 | 59 | 59 | 49 | 49 |
| PA6 Mn 2500 | 20 | 30 | 20 | 20 | 30 | 30 | 30 | 30 | 30 | 30 |
| PA11 Mn 2500 | | | | | | | | | | |
| Soarnol® H4815 | | | 20 | 30 | 10 | 20 | | | | |
| Soamol® A 4412 | | | | | | | 10 | | 20 | |
| Soamol® AT 4403 | | | | | | | | 10 | | 20 |
| Irganox 1098 | 0.5 | 0.5 | 0.5 | 0.5 | 0.5 | 0.5 | 0.5 | 0.5 | 0.5 | 0.5 |
| Irgafos 168 | 0.5 | 0.5 | 0.5 | 0.5 | 0.5 | 0.5 | 0.5 | 0.5 | 0.5 | 0.5 |
| Variation dimensionnelle après vieillissement | +74% | +62% | +52% | +38% | +29% | +44% | +46% | +45% | +32% | +34% |
| Prise en masse après vieillissement | +92% | +85% | +62% | +38% | +29% | +49% | +57% | +56% | +35% | +40% |
| Allongement à la rupture initial (%) | 570 | 490 | 510 | 410 | 510 | 550 | 520 | 540 | 480 | 470 |
| Taux de rétention en la allongement à la rupture | 21% | 32% | 38% | 50% | 47% | 56% | 56% | 46% | 50% | 46% |
| Contrainte à la rupture initiale (MPa) | 16 | 21 | 21 | 22 | 27 | 25 | 24 | 25 | 26 | 25 |
| Taux de rétention en contrainte à la rupture | 14% | 28% | 42% | 54% | 51% | 42% | 42% | 35% | 53% | 44% |

Exemples 9 à 12 : Performance de tenue aux huiles de compositions à base de greffons en polyamide 6 oligomères et de polyamide 6 de haute masse molaire et de compositions à base de greffons en polyamide. 11 oligomères et de polyamide 11 de haute masse molaire.

Dans le tableau 2 ci-dessous, sont rassemblées les données de gonflement et de rétention des propriétés mécaniques après vieillissement dans l'huile de 2 compositions à greffons en polyamide 6 oligomère contenant un polyamide 6 haute masse DOMAMID® 27 (exemples 9 et 10), 2 compositions à greffons en polyamide 11 oligomère contenant un polyamide 11 haute masse RILSAN® BMNO TLD (exemples 11 et 12), d'une composition à greffon polyamide 6 oligomère sans polyamide 6 haute masse pour comparaison (exemple comparatif EC2) et d'une composition à greffon polyamide 11 oligomère sans polyamide 11 haute masse pour comparaison (exemple comparatif EC3).

Tableau 2

| **Exemples** | **EC2** | **9** | **10** | **EC3** | **11** | **12** |
|---|---|---|---|---|---|---|
| Procédé | W30-2 | W30-1 | W30-1 | W30-1 | W30-1 | W30-1 |
| Lotader® 7500 | 69 | 59 | 49 | 69 | 59 | 49 |
| PA6 (Mn=2500 g.mol$^{-1}$) | 30 | 30 | 30 | | | |
| PA11 ($M_n$=2500 g.mol$^{-1}$) | | | | 30 | 30 | 30 |
| DOMAMID® 27 | | 10 | 20 | | | |
| RILSAN® BMNO TLD | | | | | 10 | 20 |
| Irganox 1098 | 0.5 | 0.5 | 0.5 | 0.5 | 0.5 | 0.5 |
| Irgafos 168 | 0.5 | 0.5 | 0.5 | 0.5 | 0.5 | 0.5 |
| Variation dimensionnelle après vieillissement | +62% | +51% | +46% | +72% | +47% | +28% |
| Prise en masse après vieillissement | +85% | +56% | +49% | +107% | +49% | +34% |
| Allongement à la rupture initial (%) | 490 | 380 | 380 | 450 | 484 | 398 |
| Taux de rétention en allongement | 32% | 30% | 33% | 33% | 42% | 58% |
| Contrainte à la rupture initiale (MPa) | 21 | 20 | 23 | 23 | 30 | 28 |
| Taux de rétention en contrainte à la rupture | 28% | 34% | 39% | 20% | 30% | 48% |

Exemples 13 et 14 : *performance de tenue aux huiles de compositions à base de greffons en polyamide 11 oligomères et d'EVOH*

Dans le tableau 3 ci-dessous, sont rassemblées les données de gonflement et de rétention des propriétés mécaniques après vieillissement dans l'huile de 2 compositions à greffon en polyamide 11 oligomère contenant de l'EVOH Soarnol® H4815 (exemples 13 et 14) et d'une composition à greffon polyamide 11 oligomère sans EVOH pour comparaison (exemple comparatif EC4).

Tableau 3

| Exemples | **EC4** | **13** | **14** |
|---|---|---|---|
| Procédé | W30-2 | W30-1 | W30-1 |
| Lotader® 7500 | 79 | 49 | 49 |
| PA11 ($M_n$=2500 g.mol$^{-1}$) | 20 | 20 | 30 |
| Soarnol® H4815 | | 30 | 20 |
| Irganox 1098 | 0.5 | 0.5 | 0.5 |
| Irgafos 168 | 0.5 | 0.5 | 0.5 |

(suite)

| Exemples | **EC4** | **13** | **14** |
|---|---|---|---|
| Variation dimensionnelle après vieillissement | +82.% | +48% | +36% |
| Prise en masse après vieillissement | +114% | +53% | +44% |
| Allongement à la rupture initial (%) | 570 | 300 | 380 |
| Taux de rétention en allongement | 25% | 29% | 30% |
| Contrainte à la rupture initiale (MPa) | 15 | 21 | 25 |
| Taux de rétention en contrainte à la rupture | 13% | 41% | 37% |

Exemples 5, 7, 8 : *Exemples de morphologie*

La figure 1 montre des clichés de microscopie électronique en transmission des formulations correspondant aux exemples 5, 7 et 8 dont les compositions sont indiquées dans le tableau 1 ci-dessus.
Ces clichés ont été obtenus après un marquage des coupes ultrafines au tétraoxyde de ruthénium. Les domaines de polyamide apparaissent en noir sur les clichés
On constate sur ces clichés qu'il n'y a pas de macro-séparation de phase de l'EVOH.

Contre-exemples 15 à 18 : *Performances de tenue aux huiles et morphologie de compositions à base de greffons en polyamide 6 de haute masse molaire et d'EVOH*

Quatre compositions à base de Lotader® 7500, d'EVOH (Soarnol® DC3203 et DC 3212) et de polyamides commerciaux non oligomères (Ultramid® B4 et DOMAMID® 24) ont été préparées par compoundage à l'aide d'une extrudeuse de laboratoire de type ThermoHaake Rheocord. Le Lotader®, l'EVOH et le polyamide ont été pré-mélangés (mélange manuel en sac). Le mélange a été ensuite introduit en zone 1 à l'aide d'un doseur pondéral de type K-TRON K2M-T20.
Dans le tableau 4, sont rassemblées les performances en tenue aux huiles des 4 compositions correspondant aux exemples 15 à 18.
Les éprouvettes réalisées avec ces compositions qui sont en matrice Lotader 7500, dont le point de fusion est de 85°C, sont entièrement fondues et détruites après un séjour de 3 jours à 90°C dans l'huile.

Tableau 4

| **Exemples** | **15** | **16** | **17** | **18** |
|---|---|---|---|---|
| Lotader® 7500 | 50 | 50 | 50 | 50 |
| Ultramid® B4 | 20 | 30 | | |
| DOMAMID® 24 | | | 20 | 30 |
| Soarnol® DC3203 | 30 | 20 | | |
| Soarnol® DC3212 | | | 30 | 20 |
| Variation dimensionnelle après vieillissement | Eprouvettes détruites Non mesurable | Eprouvettes détruites Non mesurable | Eprouvettes détruites Non mesurable | Eprouvettes détruites Non mesurable |
| Prise en masse après vieillissement | " | " | " | " |
| Taux de rétention en allongement | 0 (Non mesurable) | 0 (Non mesurable) | 0 (Non mesurable) | 0 (Non mesurable) |
| Taux de rétention en contrainte à la rupture | " | " | " | " |

La figure 2 représente les morphologies obtenues par microscopie électronique en transmission des compositions correspondant aux exemples 16 et 18 décrits ci-dessus.
Dans les compositions des exemples 16 et 18, la phase polyamide 6 apparaît en noir et les nodules d'EVOH apparaissent légèrement grisés. La barre d'échelle correspond à 1 micromètre.

Exemple 17 : *Performance en perméabilité à l'oxygène de compositions à base de greffons en polyamide 6 oligomères et d'EVOH*

Dans le tableau 5 ci-dessous, sont rassemblées les données de perméabilité à l'oxygène d'une composition selon l'invention à base de Lotader® 3210, de polyamide 6 (Mn 2500 $g.mol^{-1}$) et de Soarnol® H4815 (exemple 19) et d'une composition sans EVOH en comparaison (exemple comparatif noté EC5).

Tableau 5

| Exemple | EC5 | 19 |
|---|---|---|
| Lotader® 3210 | 79 | 59 |
| PA6 (Mn = 2500 $g.mol^{-1}$) | 20 | 20 |
| Soamol® H4815 | | 20 |
| Irganox 1098 | 0.5 | 0.5 |
| Irgafos 168 | 0.5 | 0.5 |
| Perméabilité à l'oxygène ($cm^3.100\mu m/m^2.24h$) | 1625 ± 59 | 77±1 |

## Revendications

1. Composition thermoplastique souple à haute tenue thermomécanique et résistant au vieillissement dans l'huile, comprenant un copolymère greffé à blocs polyamides constitué d'un tronc en polyoléfine et d'au moins un greffon en polyamide dans lequel :

   - les greffons sont attachés au tronc par les restes d'un monomère insaturé (X) ayant une fonction capable de réagir avec un polyamide ayant une extrémité amine ou une extrémité acide carboxylique,
   - les restes du monomère insaturé (X) sont fixés sur le tronc par greffage ou copolymérisation depuis sa double liaison,

   **caractérisée en ce qu'**elle comprend :

   - de 40 à 90 % en poids du tronc en polyoléfine comprenant le monomère insaturé (X),
   - de 5 à 40 %, de préférence de 15 à 30 %, en poids de greffons en polyamide, et
   - de 5 à 40 %, de préférence de 10 à 30 %, en poids d'au moins un polymère choisi parmi un copolymère éthylène/acétate de vinyle saponifié et un polyamide.

2. Composition thermoplastique selon la revendication 1, **caractérisée en ce que** les greffons en polyamide ont une masse molaire comprise entre 1000 et 5000 $g.mol^{-1}$, de préférence comprise entre 2000 et 3000 $g.mol^{-1}$.

3. Composition selon la revendication 1 ou 2, **caractérisée en ce que** le polyamide des greffons est un polyamide monofonctionnel; de préférence choisi parmi le polyamide 6, le polyamide 11, le polyamide 12, le copolyamide 6/11 et le copolyamide 6/12.

4. Composition thermoplastique selon l'une quelconque des revendications 1 à 3, **caractérisée en ce que** le polyamide est de masse molaire supérieure ou égale à 10 000 $g.mol^{-1}$.

5. Composition thermoplastique selon l'une quelconque des revendications 1 à 4, **caractérisée en ce que** le polyamide est de même nature chimique que le polyamide des greffons.

**6.** Composition thermoplastique selon l'une quelconque des revendications 1 à 5, **caractérisée en ce que** le monomère insaturé (X) est choisi parmi un anhydride d'acide carboxylique insaturé et un époxyde insaturé.

**7.** Composition thermoplastique selon la revendication 6, **caractérisée en ce que** le tronc en polyoléfine sur lequel est fixé le monomère insaturé (X) est choisi parmi le copolymère éthylène/anhydride maléique, le terpolymère éthylène/(méth)acrylate d'alkyle/anhydride maléique et le terpolymère éthylène/(méth)acrylate d'alkyle/(méth) acrylate de glycidyle.

**8.** Composition thermoplastique selon l'une quelconque des revendications 1 à 7, **caractérisée en ce qu'**il y a au moins 1,3 monomère insaturé (X) fixé sur le tronc en polyoléfine.

**9.** Composition thermoplastique selon l'une quelconque des revendications 1 à 8, **caractérisée en ce que** le copolymère éthylène/acétate de vinyle saponifié, a une teneur en éthylène comprise entre 20 et 60 % en moles, de préférence entre 29 et 48 % en moles, et un indice de fluidité (MFI) compris entre 2 et 30 g/10mn (mesuré à 210°C sous 2,16 kg).

**10.** Composition thermoplastique selon l'une quelconque des revendications 1 à 9, **caractérisée en ce qu'**elle comprend en outre des additifs anti-oxydants et/ou des stabilisants thermiques.

**11.** Utilisation de la composition thermoplastique selon l'une quelconque des revendications 1 à 10, pour la fabrication de pièces, de préférence par extrusion ou injection, notamment pour l'industrie automobile, en particulier de pièces disposées "sous capot-moteur".

## Claims

**1.** Flexible thermoplastic composition having a high thermomechanical strength and being resistant to ageing in oil, comprising a grafted copolymer having polyamide blocks, formed from a polyolefin backbone and from at least one polyamide graft in which:

- the grafts are attached to the backbone by the residues of an unsaturated monomer (X) having a functional group capable of reacting with a polyamide having an amine end group or a carboxylic acid end group;
- the residues of the unsaturated monomer (X) are attached to the backbone by grafting or copolymerization via its double bond;

**characterized in that** it comprises:

- from 40 to 90% by weight of the polyolefin backbone comprising the unsaturated monomer (X) ;
- from 5 to 40%, preferably 15 to 30%, by weight of polyamide grafts; and
- from 5 to 40%, preferably from 10 to 30%, by weight of at least one polymer chosen from a saponified ethylene vinyl acetate copolymer and a polyamide.

**2.** Thermoplastic composition according to Claim 1, **characterized in that** the polyamide grafts have a molecular weight between 1000 and 5000 g/mol, preferably between 2000 and 3000 g/mol.

**3.** Composition according to Claim 1 or 2, **characterized in that** the polyamide of the grafts is a monofunctional polyamide, preferably chosen from nylon-6, nylon-11, nylon-12, nylon-6/11 and nylon-6/12.

**4.** Thermoplastic composition according to any one of Claims 1 to 3, **characterized in that** the polyamide having a molecular weight greater than or equal to 10 000 g/mol.

**5.** Thermoplastic composition according to any one of the preceding Claims, **characterized in that** the polyamide is of the same chemical nature as the polyamide of the grafts.

**6.** Thermoplastic composition according to any one of Claims 1 to 5, **characterized in that** the unsaturated monomer (X) is chosen from an unsaturated carboxylic acid anhydride and an unsaturated epoxide.

**7.** Thermoplastic composition according to Claim 6, **characterized in that** the polyolefin backbone onto which the

unsaturated monomer (X) is attached is chosen from the ethylene/maleic anhydride copolymer, the ethylene/alkyl (meth)acrylate/- maleic anhydride terpolymer and the ethylene/alkyl (meth) acrylate/glycidyl (meth) acrylate terpolymère.

**8.** Thermoplastic composition according to any one of Claims 1 to 6, **characterized in that** there are at least one 1,3 unsaturated monomers (X) attached to the polyolefin backbone.

**9.** Thermoplastic composition according to any one of Claims 1 to 7, **characterized in that** the saponified ethylene vinyl acetate copolymer has an ethylene content of between 20 and 60 mol%, preferably between 29 and 48 mol%, and a melt flow index (MFI) between 2 and 30 g/10 min (measured at 210°C under 2,16 kg).

**10.** Thermoplastic composition according to any one of Claims 1 to 9, **characterized in that** it comprises, in addition, antioxidant and/or heat stabilizer additives.

**11.** Use of the thermoplastic composition according to any one of Claims 1 to 10, for manufacturing parts, preferably by extrusion or injection moulding, especially for the automotive industry, in particular parts placed "under the engine bonnet".

## Patentansprüche

**1.** Flexible, gegenüber Alterung in Öl beständige thermoplastische Zusammensetzung mit hoher thermomechanischer Festigkeit, umfassend ein Pfropfcopolymer mit Polyamidblöcken, bestehend aus einer Polyolefin-Hauptkette und mindestens einem Polyamid-Pfropfanteil, worin:

- die Pfropfanteile über Reste eines ungesättigten Monomers (X) mit einer Funktion, die mit einem Polyamid mit einer Aminendgruppe oder einer Carbonsäureendgruppe reagieren kann, an die Hauptkette gebunden sind,
- die Reste des ungesättigten Monomers (X) durch Pfropfung oder Copolymerisation über seine Doppelbindung an der Hauptkette fixiert sind,

**dadurch gekennzeichnet, daß** sie:

- 40 bis 90 Gew.-% der Polyolefin-Hauptkette, die das ungesättigte Monomer (X) umfaßt,
- 5 bis 40 Gew.-% und vorzugsweise 15 bis 30 Gew.-% Polyamid-Pfropfanteile und
- 5 bis 40 Gew.-% und vorzugsweise 10 bis 30 Gew.-% mindestens eines Polymers, das unter einem verseiften Ethylen-Vinylacetat-Copolymer und einem Polyamid ausgewählt ist,

umfaßt.

**2.** Thermoplastische Zusammensetzung nach Anspruch 1, **dadurch gekennzeichnet, daß** die Polyamid-Pfropfanteile eine Molmasse zwischen 1000 und 5000 $g.mol^{-1}$ und vorzugsweise zwischen 2000 und 3000 $g.mol^{-1}$ aufweisen.

**3.** Zusammensetzung nach Anspruch 1 oder 2, **dadurch gekennzeichnet, daß** es sich bei dem Polyamid der Pfropfanteile um ein monofunktionelles Polyamid handelt, das vorzugsweise unter Polyamid-6, Polyamid-11, Polyamid-12, Copolyamid-6/11 und Copolyamid-6/12 ausgewählt ist.

**4.** Thermoplastische Zusammensetzung nach einem der Ansprüche 1 bis 3, **dadurch gekennzeichnet, daß** das Polyamid eine Molmasse größer gleich 10.000 $g.mol^{-1}$ aufweist.

**5.** Thermoplastische Zusammensetzung nach einem der Ansprüche 1 bis 4, **dadurch gekennzeichnet, daß** das Polyamid die gleiche chemische Beschaffenheit aufweist wie das Polyamid der Pfropfanteile.

**6.** Thermoplastische Zusammensetzung nach einem der Ansprüche 1 bis 5, **dadurch gekennzeichnet, daß** das ungesättigte Monomer (X) unter einem Anhydrid einer ungesättigten Carbonsäure und einem ungesättigten Epoxid ausgewählt ist.

**7.** Thermoplastische Zusammensetzung nach Anspruch 6, **dadurch gekennzeichnet, daß** die Polyolefinhauptkette, an der das ungesättigte Monomer (X) fixiert ist, unter Ethylen/Maleinsäureanhydrid-Copolymer, Ethylen/Alkyl(meth)acrylat/Maleinsäureanhydrid-Terpolymer und Ethylen/Alkyl(meth)acrylat/- Glycidyl(meth)acrylat-Terpolymer ausgewählt ist.

8. Thermoplastische Zusammensetzung nach einem der Ansprüche 1 bis 7, **dadurch gekennzeichnet, daß** mindestens 1,3 ungesättigte Monomere (X) an der Polyolefinhauptkette fixiert sind.

9. Thermoplastische Zusammensetzung nach einem der Ansprüche 1 bis 8, **dadurch gekennzeichnet, daß** das verseifte Ethylen/Vinylacetat-Copolymer einen Ethylengehalt zwischen 20 und 60 Mol-% und vorzugsweise zwischen 29 und 48 Mol-% und einen Schmelzflußindex (MFI) zwischen 2 g und 30 g/10 min (gemessen bei 210°C unter 2,16 kg) aufweist.

10. Thermoplastische Zusammensetzung nach einem der Ansprüche 1 bis 9, **dadurch gekennzeichnet, daß** sie außerdem Antioxidans- und/oder Wärmestabilisator-Additive umfaßt.

11. Verwendung der thermoplastischen Zusammensetzung nach einem der Ansprüche 1 bis 10 zur Herstellung von Teilen, vorzugsweise durch Extrusion oder Spritzguß, insbesondere für die Autoindustrie, insbesondere von Teilen, die "unter der Motorhaube" angeordnet sind.

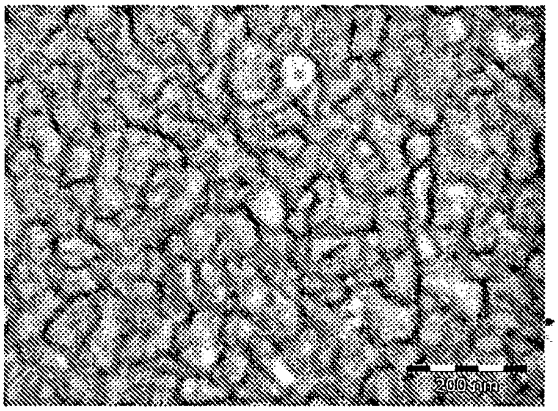


Exemple 5

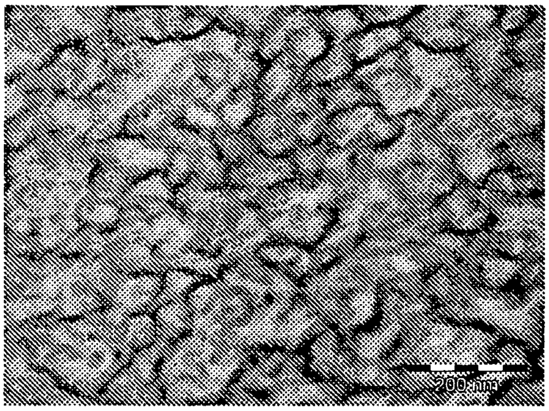


Exemple 7

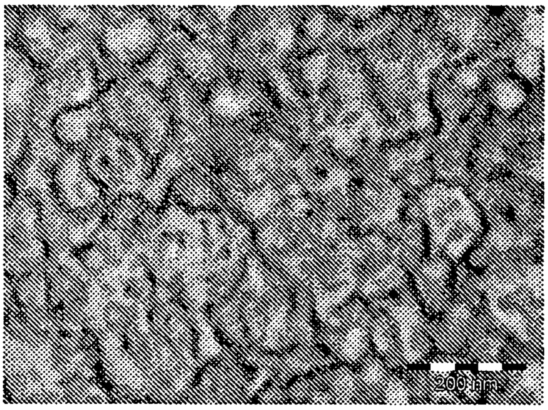


Exemple 8

*<u>Figure 1</u> : Clichés de microscopie électronique en transmission des exemples 5, 7 et 8 obtenus après un marquage au tétraoxyde de ruthénium. La phase polyamide 6 apparaît en noir. La barre d'échelle correspond à 200 nanomètres.*

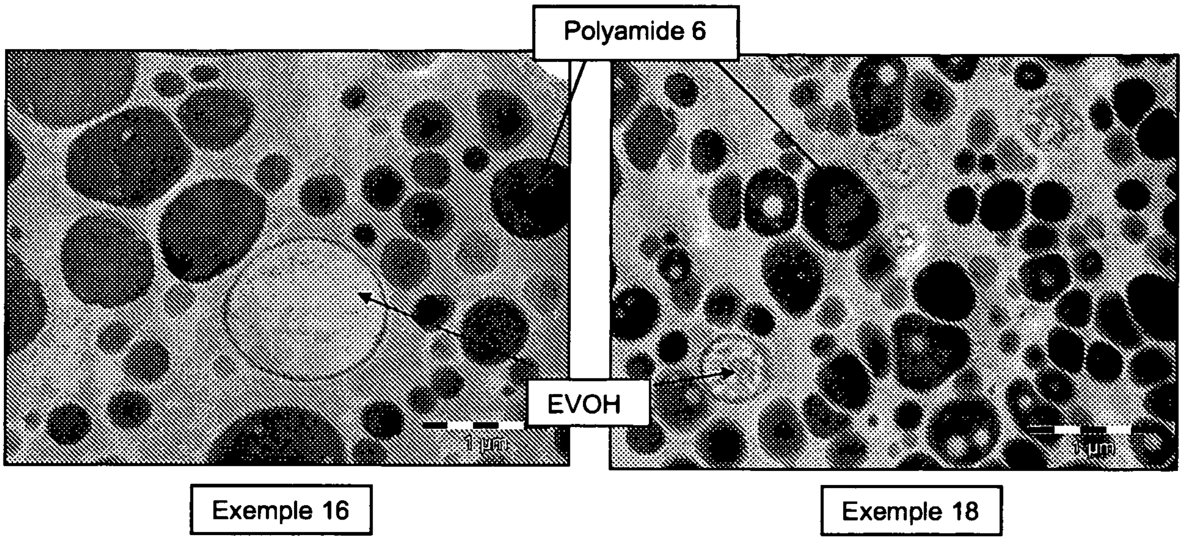


*<u>Figure 2</u> : Clichés de microscopie électronique en transmission des exemples 16 et 18 obtenus après un traitement à l'acide phosphotungstique des coupes ultrafines.*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0228959 A
- US 5278229 A
- EP 0403109 A
- EP 1022309 A
- US 3976720 A
- US 3963799 A
- US 5342886 A
- FR 2291225